# EUROPÄISCHE PATENTANMELDUNG

(11) **EP 3 582 354 A1**
(43) Veröffentlichungstag der Anmeldung: **18.12.2019**
(21) Anmeldenummer: 18177743.4
(22) Anmeldetag: 14.06.2018
(51) Int. Cl.: H02H 3/087, H02H 3/24, H02H 3/247, H02H 3/38, H02H 3/06, H02H 7/26, H02H 3/18, H02H 3/08

(54) **GLEICHSTROMSCHALTER**

(71) Anmelder: Siemens Aktiengesellschaft, 80333 München (DE)
(72) Erfinder: Handt, Karsten, 92348 Berg (DE); Hänsel, Stefan, 91083 Baiersdorf (DE); Nielebock, Sebastian, 91301 Forchheim (DE)

(57) **Zusammenfassung**

Gleichstromschalter (10, 20, 30, 40, 57, 58), umfassend:
- wenigstens ein Paar aus einem ersten und zweiten abschaltbaren Leistungshalbleiter (11, 12, 31, 32), die antiseriell oder antiparallel zwischen einen ersten Anschluss (6) und einen zweiten Anschluss (8) geschaltet sind,
- eine erste Spannungs-Messvorrichtung (13) zur Ermittlung der Spannung am ersten Anschluss (6),
- eine zweite Spannungs-Messvorrichtung (14) zur Ermittlung der Spannung am zweiten Anschluss (8),
- eine Steuervorrichtung (15), ausgestaltet, einen oder beide der Leistungshalbleiter (11, 12, 31, 32) in Abhängigkeit von einem Messwert für den Strom durch den Gleichstromschalter (10, 20, 30, 40, 57, 58) abzuschalten,
wobei die Steuervorrichtung (15) ausgestaltet ist, nach einer festlegbaren Zeitspanne eine Differenz zwischen den Spannungswerten am ersten und am zweiten Anschluss (6, 8) zu ermitteln und einen oder beide der Halbleiterschalter (11, 12, 31, 32) einzuschalten, wenn der Betrag der Differenz unter einem Schwellwert liegt.

## Beschreibung

Die Erfindung betrifft einen Gleichstromschalter mit wenigstens einem Paar aus einem ersten und zweiten abschaltbaren Leistungshalbleiter sowie ein Verfahren zur Steuerung des Gleichstromschalters.

DC-Netze mit Betriebsspannungen von typischerweise zwischen 400 V und 800 V sollen in zukünftigen Industrieanlagen Verluste reduzieren, den direkten Energieaustausch zwischen Umrichtern, Speichern und Motoren gewährleisten und eine erhöhte Robustheit erzielen. Solche DC-Industrienetze sollen Selektivität zwischen den Lastabgängen aufweisen, damit bei einem Kurzschluss an einem Lastabgang der Strom möglichst nicht aus einem benachbarten Lastabgang fließt, falls dieser benachbarten Lastabgang mit einem Zwischenkreis an dem DC-Netz angebunden ist, beispielsweise also bei einem Umrichter. Speziell wenn der benachbarte Lastabgang eine kleinere Leistung hat als der kurzgeschlossene, kann ein solcher Querstrom schnell Werte annehmen, bei denen der benachbarte Lastabgang abschaltet, obwohl in ihm kein Fehler vorliegt.

Ein bekannter Lösungsansatz ist das Einbringen von so viel Leitungslänge in den Lastabgang, dass Querströme gering bleiben. Nachteilig ist, dass dieser Ansatz eine spezielle Auslegung für jedes konkrete DC Netz erfordert. Weiterhin beeinflussen die zusätzlichen Leitungen die Dynamik des DC-Netzes nachteilig, was unter Umständen die Installation zusätzlicher Kapazitäten nach sich zieht.

Ein weiterer bekannter Lösungsansatz ist das Zulassen eines größeren ausgangsseitigen Stromes als eingangsseitig. Dadurch wird bewirkt, dass derjenige Leistungshalbleiter, in den der Kurzschluss-Strom hineinfließt, eher ausschaltet als derjenige Leistungshalbleiter, aus dem der (anteilige) Kurzschluss-Strom herausfließt. Nachteilig an dieser Möglichkeit ist, dass sie voraussetzt, dass die Nennströme in den betroffenen Lastabgängen in etwa gleich groß sind, was die Nutzbarkeit dieser Möglichkeit einschränkt.

Es ist Aufgabe der vorliegenden Erfindung, einen verbesserten Gleichstromschalter anzugeben, mit dem bei Verwendung in einem DC-Netz eine verbesserte Selektivität erreicht werden kann. Eine weitere Aufgabe besteht darin, ein Verfahren zur Steuerung des Gleichstromschalters anzugeben.

Diese Aufgabe wird gelöst durch einen Gleichstromschalter mit den Merkmalen von Anspruch 1. Hinsichtlich des Verfahrens wird die Aufgabe durch ein Verfahren mit den Merkmalen von Anspruch 12 gelöst.

Der erfindungsgemäße Gleichstromschalter umfasst wenigstens ein Paar aus einem ersten und zweiten abschaltbaren Leistungshalbleiter, die antiseriell oder antiparallel zwischen einen ersten Anschluss und einen zweiten Anschluss geschaltet sind sowie eine erste Spannungs-Messvorrichtung zur Ermittlung der Spannung am ersten Anschluss und eine zweite Spannungs-Messvorrichtung zur Ermittlung der Spannung am zweiten Anschluss.

Weiterhin weist der Gleichstromschalter eine Steuervorrichtung auf. Diese ist ausgestaltet, einen oder beide der Leistungshalbleiter in Abhängigkeit von einem Messwert für den Strom durch den Gleichstromschalter abzuschalten.

Die Steuervorrichtung ist ferner ausgestaltet, nach einer festlegbaren Zeitspanne eine Differenz zwischen den Spannungswerten am ersten und am zweiten Anschluss zu ermitteln und einen oder beide der Halbleiterschalter einzuschalten, wenn der Betrag der Differenz unter einem Schwellwert liegt.

Bei dem erfindungsgemäßen Verfahren wird ein erfindungsgemäßer Gleichstromschalter verwendet und gesteuert und in Abhängigkeit von einem Messwert für den Strom durch den Gleichstromschalter einer oder beide der abschaltbaren Halbleiterschalter abgeschaltet, nach einer festlegbaren Zeitspanne eine Differenz zwischen den Spannungswerten am ersten und am zweiten Anschluss ermittelt, und einer oder beide der Halbleiterschalter eingeschaltet, wenn der Betrag der Differenz unter einem Schwellwert liegt.

Für die Erfindung wurde erkannt, dass damit zu rechnen ist, dass bei Auftreten eines Fehlers in einem DC-Netz kurz nach der Trennung des Fehlers vom DC-Netz die Spannung im verbleibenden Teil des DC-Netzes wieder auf die Soll-DC-Spannung zurückkehrt. Schaltet ein Gleichstromschalter eines weiteren Lastabgangs einen Querstrom ab, der durch den Fehler verursacht wird, dann signalisiert eine Rückkehr zur Sollspannung, dass der Fehler endgültig vom DC-Netz getrennt ist. Der weitere Lastabgang kann dann vorteilhaft wieder zugeschaltet werden.

Besonders vorteilhaft ist das bei Lasten, die einen Energiespeicher aufweisen, beispielsweise also bei Umrichter-gespeisten Lasten. Das Abschalten des Querstroms verhindert, dass der Querstrom den Energiespeicher, also den Zwischenkreis des Umrichters, in unerwünschter Weise entlädt. Für kurze Zeit kann die Last aus dem Energiespeicher betrieben werden, der Umrichter arbeitet also mit der Energie des Zwischenkreises weiter. Ist der Fehler endgültig getrennt, kann die Verbindung vom DC-Versorgungsnetz zum Umrichter wieder hergestellt werden. Die Wirkung des Fehlers bleibt dadurch soweit als möglich auf die Last beschränkt, bei der der Fehler auftritt.

Vorteilhafte Ausgestaltungen des erfindungsgemäßen Gleichstromschalters und des erfindungsgemäßen Verfahrens gehen aus den abhängigen Ansprüchen hervor. Dabei kann die Ausführungsform nach den unabhängigen Ansprüchen mit den Merkmalen eines der Unteransprüche oder vorzugsweise auch mit denen aus mehreren Unteransprüchen kombiniert werden. Demgemäß können noch zusätzlich folgende Merkmale vorgesehen sein:
- Die Zeitspanne kann zwischen 10 ms und 500 ms, insbesondere zwischen 20 ms und 100 ms betragen. Diese Zeitspannen reichen typischerweise aus, um eine endgültige Abschaltung des eigentlichen Fehlers zu erlauben und eine nachfolgende Stabilisierung der Spannung im DC-Netzwerk. Gleichzeitig ist über diese Zeitspannen hinweg eine Weiterversorgung einer speichergespeisten, beispielsweise Umrichter-gespeisten Last nur aus dem Speicher möglich, sodass für solche Lasten die Auswirkungen des Fehlers vermindert oder vermieden werden.
- Die Leistungshalbleiter können getrennte Treiber aufweisen und die Steuervorrichtung zu einer selektiven Abschaltung nur eines der beiden Leistungshalbleiter in Abhängigkeit von der Polarität des Stroms ausgestaltet sein. Hierdurch kann vorteilhaft nur der Stromfluss in Querrichtung, also zum Fehler hin abgeschaltet werden, während die Versorgung der Last an diesem Gleichstromschalter nicht unterbrochen wird. Der temporäre Abschaltzustand, der in diesem Fall nur einen der beiden Leistungshalbleiter betrifft, wird wieder für die Dauer der Zeitspanne beibehalten und dann der Gleichstromschalter ggfs. wieder eingeschaltet.
- Die Leistungshalbleiter können eine UCE-Überwachung zur Detektion eines Kurzschlusses umfassen, wobei die Steuervorrichtung ausgestaltet ist, einen detektierten Kurzschluss unabhängig von einer übergeordneten Steuerung abzuschalten. Der Gleichstromschalter kann hierdurch selbständig und dadurch schneller reagieren.
- Der Gleichstromschalter kann ein Schutzelement, insbesondere einen Lasttrennschalter und/oder eine Sicherung zwischen dem ersten Anschluss und einem der abschaltbaren Halbleiterschalter aufweisen.
- Die Steuervorrichtung kann eine Schnittstelle zu einer übergeordneten Steuerung aufweisen, wobei mittels der übergeordneten Steuerung die abschaltbaren Halbleiterschalter zu- und abschaltbar sind.
- Die Leistungshalbleiter können antiseriell geschaltete IGBTs mit einer zugehörigen Freilaufdiode sein. Alternativ können die Leistungshalbleiter antiseriell geschaltete Feldeffekt-Transistoren sein.
- Zusätzlich kann vor dem Einschalten des Gleichstromschalters geprüft werden, ob die gemessenen Spannungen einen Mindestwert erreichen, der für das DC-Netzwerk vorgesehen ist, beispielsweise einen Mindestwert von 380 V. Dadurch wird sichergestellt, dass der Gleichstromschalter nicht einschaltet, weil beide gemessenen Spannungen nahe 0 V sind.
- Ein Gleichspannungssystem, das vorteilhaft mit den vorbeschriebenen Gleichstromschaltern arbeitet, kann mindestens eine Energiequelle mit einem Gleichspannungsausgang, mindestens einen elektrischen Verbraucher mit einem Gleichspannungsanschluss und mindestens einen zwischen Energiequelle und Verbraucher geschalteten solchen Gleichstromschalter aufweisen.

Dabei kann die Energiequelle mit einem Gleichspannungs-Versorgungsbus verbunden sein. Der Gleichspannungs-Versorgungsbus wiederum kann einen oder mehrere Abzweige aufweisen, an denen jeweils ein oder mehrere der Verbraucher angeschlossen sind, wobei für wenigstens einen Teil der Verbraucher, zweckmäßig aber alle Verbraucher, ein zwischen Energiequelle und Verbraucher geschalteter Gleichstromschalter vorhanden ist. Auch die Abzweige selbst können einen eigenen Gleichstromschalter aufweisen.

Weitere Vorteile und Merkmale sind der folgenden Beschreibung von Ausführungsbeispielen anhand der Figuren zu entnehmen. In den Figuren bezeichnen gleiche Bezugszeichen gleiche Bauteile und Funktionen.

Es zeigen:
Figuren 1 bis 4 Ausführungen von Gleichstromschaltern,
Figur 5 ein DC-Netzwerk mit den Gleichstromschaltern,
Figur 6 ein Schema für das Betriebsverfahren für die Gleichstromschalter.

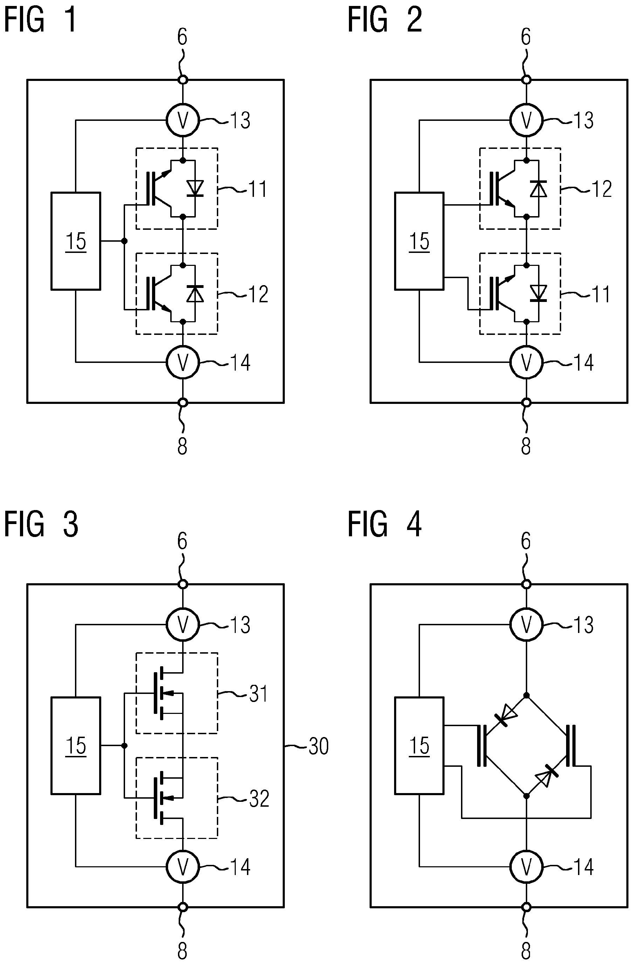

Die Figuren 1 bis 4 zeigen vier unterschiedliche Ausführungsbeispiele für einen Gleichstromschalter. Der Gleichstromschalter 10 gemäß Figur 1 umfasst einen ersten und zweiten IGBT 11, 12, die antiseriell zwischen einen Eingangs- und einen Ausgangsknoten 6, 8 geschaltet sind. Die IGBTs 11, 12 umfassen jeweils eine Freilaufdiode für die Rückrichtung. Zu beiden Seiten des IGBTs 11, 12 ist je ein Spannungswandler 13, 14 angeordnet zur Bestimmung der Spannung am Ein- und am Ausgangsknoten 6, 8. Der Gleichstromschalter 10 umfasst ferner eine Steuereinrichtung 15, die die Ansteuerung der IGBTs 11, 12 sowie die Signalverarbeitung der Spannungswandler 13, 14 durchführt. Die Steuereinrichtung 15 sorgt für die Abschaltung der IGBTs 11, 12 bei einem Überstrom, also im Fehlerfall. Dabei werden wie in Figur 1 angedeutet, stets beide IGBTs 11, 12 zusammen an- und abgeschaltet. Die Steuereinrichtung 15 umfasst ferner eine Programmierung, nach einer temporären Abschaltung im Fehlerfall eine Zeitspanne von 50 ms verstreichen zu lassen. Danach werden die Spannungsmesswerte der Spannungswandler 13, 14 aufgenommen und verglichen. Für den Vergleich kann beispielsweise die Differenz der Spannungsmesswerte gebildet und von der Differenz der Betrag betrachtet werden. Ist dieser Betrag kleiner als ein Schwellwert, d.h. sind die Spannungsmesswerte ähnlich groß, schaltet die Steuereinrichtung 15 die IGBTs 11, 12 wieder ein. Dabei ist es zweckmäßig, auch die absoluten Spannungen zu betrachten und das Einschalten nicht vorzunehmen, wenn beide Spannungen nahe 0 V sind.

Der Gleichstromschalter 20 gemäß Figur 2 umfasst ebenfalls einen ersten und zweiten IGBT 11, 12, die antiseriell zwischen einen Eingangs- und einen Ausgangsknoten 6, 8 geschaltet sind. Im Gegensatz zum Gleichstromschalter 10 der Figur 1 sind hier die Orientierungen der IGBTs 11, 12, vertauscht. Ebenfalls im Gegensatz zu Figur 1 ist die Steuereinrichtung 15 beim Gleichstromschalter 20 so mit den IGBTs 11, 12 verbunden, dass die IGBTs 11, 12 einzeln an- und abschaltbar sind. Dadurch kann bei einem auftretenden Überstrom die Steuereinrichtung 15 den passenden der beiden IGBTs 11, 12 abschalten und den jeweils anderen angeschaltet lassen. Die Steuereinrichtung 15 umfasst wie beim Gleichstromschalter der Figur 1 die Programmierung, nach einer temporären Abschaltung im Fehlerfall eine Zeitspanne verstreichen zu lassen. Danach werden die Spannungsmesswerte der Spannungswandler 13, 14 aufgenommen und verglichen. Sind die Spannungsmesswerte ähnlich groß, schaltet die Steuereinrichtung 15 den abgeschalteten IGBT 11, 12 wieder ein. Mit diesem Gleichstromschalter 20 kann also eine Abschaltung von Querströmen erreicht werden, ohne dass gleichzeitig die Versorgung der Last dieses Gleichstromschalters 20 unterbrochen wird.

Der Gleichstromschalter 30 gemäß Figur 3 ist analog zum Gleichstromschalter 10 gemäß Figur 1 aufgebaut, umfasst aber anstelle der IGBTs 11, 12 zwei MOSFETs 31, 32, die antiseriell zwischen den Eingangs- und den Ausgangsknoten 6, 8 geschaltet sind.

Der Gleichstromschalter 40 gemäß Figur 4 ist analog zum Gleichstromschalter 20 gemäß Figur 3 aufgebaut, wobei die IGBTs 11, 12 aber nicht antiseriell, sondern antiparallel verschaltet sind.

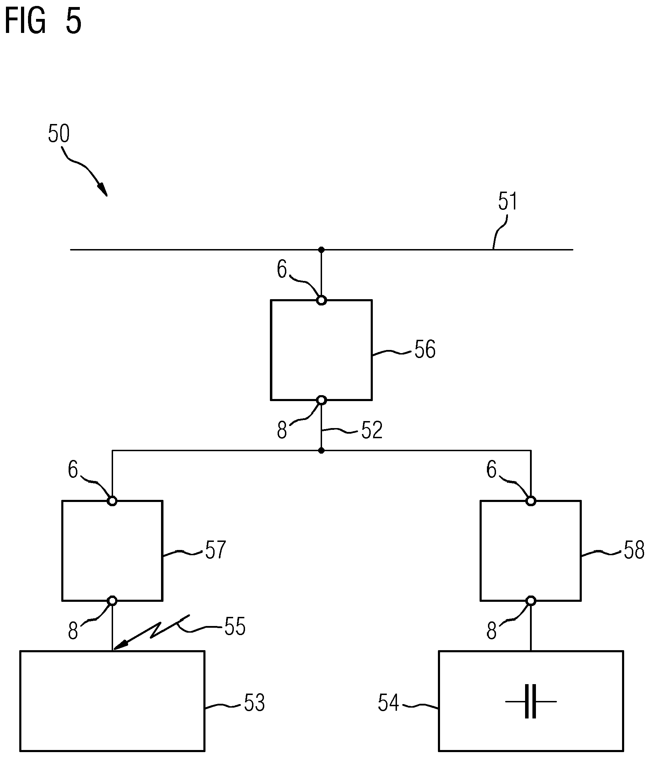

Figur 5 zeigt einen Ausschnitt aus einem DC-Netzwerk 50, das mehrere der Gleichstromschalter 10, 20, 30, 40 einsetzt. Das DC-Netzwerk 50 umfasst eine DC-Hauptschiene 51, die die Versorgung des DC-Netzwerks 50 darstellt und mit einer in Figur 5 nicht dargestellten DC-Quelle verbunden ist. An die DC-Hauptschiene 51 schließen mehrere Abzweige 52 an, von denen in Figur 5 nur einer beispielhaft dargestellt ist. Damit der Abzweig 52 von der DC-Hauptschiene 51 getrennt werden kann, umfasst der Abzweig 52 einen eigenen Gleichstromschalter 56. Ausgangsseitig versorgt der Abzweig 52 beispielhaft eine erste Last 53 und eine zweite Last 54. Die erste Last 53 ist über einen eigenen Gleichstromschalter 57 mit dem Abzweig 52 verbunden und die zweite Last 54 ist über einen eigenen Gleichstromschalter 58 mit dem Abzweig 52 verbunden. Die zweite Last 54 soll in diesem Beispiel einen Umrichter mit Zwischenkreis umfassen.

Tritt im laufenden Betrieb im Bereich der ersten Last 53 ein Fehler 55 in Form eines Kurzschlusses auf, steigt der zur ersten Last 53 fließende Strom stark an. Dieser Strom kann einerseits vom DC-Netzwerk 50 selbst über die DC-Hauptschiene 51 und den Abzweig 52 geliefert werden, er kann aber auch teilweise als Querstrom aus der zweiten Last 54 fließen. Der Energiespeicher, der durch den Zwischenkreis des Umrichters in der zweiten Last 45 gebildet wird, wird dabei entladen. Somit wird der Betrieb der zweiten Last 54 durch einen Fehler 55 beeinträchtigt, der überhaupt nicht im Bereich der zweiten Last 54 oder der Versorgung liegt. Ist der Querstrom hoch genug, kann es bei einem bekannten Gleichstromschalter sogar dazu kommen, dass die zweite Last 54 durch Abschaltung dieses Gleichstromschalters vom DC-Netzwerk 50 getrennt wird.

Der Gleichstromschalter 58, der gemäß der Erfindung gestaltet ist, führt jedoch eine temporäre Abschaltung durch. Diese temporäre Abschaltung unterbindet den Querstrom zum Fehler 55. Je nach Gestaltung des Gleichstromschalters 58 zur getrennten oder gemeinsamen Abschaltung der Leistungshalbleiter wird dabei auch die Versorgung der zweiten Last 54 unterbunden. Nach einer Zeitspanne von beispielsweise 50 ms oder 100 ms prüft der Gleichstromschalter 58, wie schon für die Ausführungsbeispiele der Figuren 1 bis 4 beschrieben, die Differenz der Spannungen an seinem Eingang 6 und Ausgang 8. Ist diese Differenz gering, dann hat sich die Spannung im Abzweig 52 stabilisiert und der Gleichstromschalter 58 wird wieder eingeschaltet. Da die zweite Last einen Energiespeicher umfasst, ist die temporäre Abschaltung kurz genug, um den Betrieb der zweiten Last 54 unbeeinträchtigt fortzusetzen. Der Gleichstromschalter 58 unterbindet somit soweit als möglich die negativen Auswirkungen eines Fehlers in einer Last auf eine andere, eigentlich nicht betroffene Last im selben Abzweig 52. Der Gleichstromschalter 58 sorgt somit für Selektivität im DC-Netzwerk 50.

Aus der Sicht des Gleichstromschalters 57 der ersten Last 53 führt der Fehler 55 ebenfalls zu einem Überstrom, wobei hier unerheblich ist, woher dieser Überstrom geliefert wird. Der Gleichstromschalter 57 schaltet nach Detektion des Überstroms diesen ab. Solange der Fehler 55 weiter besteht, wird die Spannung im Bereich des Ausgangs 8 von Gleichstromschalter 57 in etwa 0 V sein. Die Spannung vor dem Eingang 6 des Gleichstromschalters 57 kann sich jedoch durch die Abschaltung wieder stabilisieren bei der Sollspannung des DC-Netzwerks 50. Da somit eine deutliche Differenz der Spannungen verbleibt, schaltet der Gleichstromschalter 57 nach Verstreichen der Zeitspanne nicht wieder ein und ermöglicht es dadurch dem Gleichstromschalter 58 der zweiten Last 54, wie oben beschrieben wieder einzuschalten. Der Gleichstromschalter 57 hingegen wechselt in einen Fehlerzustand und bleibt abgeschaltet.

Wird der Gleichstromschalter 56, der für den Abzweig 52 vorgesehen ist, abgeschaltet, dann kann sich die Spannung hinter dem Gleichstromschalter 56 stabilisieren, wenn der Abzweig 52 eine Energiequelle umfasst, beispielsweise eine Photovoltaik-Anlage, eine rückspeisefähige Last, oder Komponenten zur Spannungsstabilisierung wie Batteriespeicher. In diesem Fall kann auch der Gleichstromschalter 56 nach Verstreichen der Zeitspanne wieder einschalten, sofern durch die Energiequelle die Spannung im Abzweig wieder den nominellen Wert angenommen hat.

### Bezugszeichenliste

- 6: Eingangsanschluss
- 8: Ausgangsanschluss
- 10: Gleichstromschalter
- 11: IGBT
- 12: IGBT
- 13: Spannungswandler
- 14: Spannungswandler
- 15: Steuerungseinrichtung
- 20: Gleichstromschalter
- 30: Gleichstromschalter
- 40: Gleichstromschalter
- 50: DC-Netzwerk
- 51: DC-Hauptschiene
- 52: Abzweig
- 53: erste Last
- 54: zweite Last
- 55: Fehler
- 56: Gleichstromschalter
- 57: Gleichstromschalter
- 58: Gleichstromschalter

## Patentansprüche

1. Gleichstromschalter (10, 20, 30, 40, 57, 58), umfassend:
- wenigstens ein Paar aus einem ersten und zweiten abschaltbaren Leistungshalbleiter (11, 12, 31, 32), die antiseriell oder antiparallel zwischen einen ersten Anschluss (6) und einen zweiten Anschluss (8) geschaltet sind,
- eine erste Spannungs-Messvorrichtung (13) zur Ermittlung der Spannung am ersten Anschluss (6),
- eine zweite Spannungs-Messvorrichtung (14) zur Ermittlung der Spannung am zweiten Anschluss (8),
- eine Steuervorrichtung (15), ausgestaltet, einen oder beide der Leistungshalbleiter (11, 12, 31, 32) in Abhängigkeit von einem Messwert für den Strom durch den Gleichstromschalter (10, 20, 30, 40, 57, 58) abzuschalten,
wobei die Steuervorrichtung (15) ausgestaltet ist, nach einer festlegbaren Zeitspanne eine Differenz zwischen den Spannungswerten am ersten und am zweiten Anschluss (6, 8) zu ermitteln und einen oder beide der Halbleiterschalter (11, 12, 31, 32) einzuschalten, wenn der Betrag der Differenz unter einem Schwellwert liegt.

2. Gleichstromschalter (10, 20, 30, 40, 57, 58) nach Anspruch 1, bei dem die Zeitspanne zwischen 10 ms und 500 ms, insbesondere zwischen 20 ms und 100 ms beträgt.

3. Gleichstromschalter (10, 20, 30, 40, 57, 58) nach Anspruch 1 oder 2, bei dem die Leistungshalbleiter (11, 12, 31, 32) getrennte Treiber aufweisen und die Steuervorrichtung (15) ausgestaltet ist zu einer selektiven Abschaltung nur eines der beiden Leistungshalbleiter (11, 12, 31, 32) in Abhängigkeit von der Polarität des Stroms.

4. Gleichstromschalter (10, 20, 30, 40, 57, 58) nach einem der vorangehenden Ansprüche, bei dem jeder der Leistungshalbleiter (11, 12, 31, 32) eine U_{CE}-Überwachung zur Detektion eines Kurzschlusses umfasst, wobei die Steuervorrichtung (15) ausgestaltet ist, einen detektierten Kurzschluss unabhängig von einer übergeordneten Steuerung abzuschalten.

5. Gleichstromschalter (10, 20, 30, 40, 57, 58) nach einem der vorangehenden Ansprüche mit einem Schutzelement, insbesondere einem Lasttrennschalter und/oder einer Sicherung zwischen dem ersten Anschluss (6) und einem der Leistungshalbleiter (11, 12, 31, 32).

6. Gleichstromschalter (10, 20, 30, 40, 57, 58) nach einem der vorangehenden Ansprüche, wobei die Steuervorrichtung (15) eine Schnittstelle zu einer übergeordneten Steuerung aufweist, wobei mittels der übergeordneten Steuerung die abschaltbaren Leistungshalbleiter (11, 12, 31, 32) zu- und abschaltbar sind.

7. Gleichstromschalter (10, 20, 30, 40, 57, 58) nach einem der vorangehenden Ansprüche, bei dem die Leistungshalbleiter (11, 12, 31, 32) antiseriell geschaltete IGBTs (11, 12) mit einer zugehörigen Freilaufdiode sind.

8. Gleichstromschalter (10, 20, 30, 40, 57, 58) nach einem der vorangehenden Ansprüche, bei dem die Leistungshalbleiter (11, 12, 31, 32) antiseriell geschaltete FeldeffektTransistoren (31, 32) sind.

9. Gleichspannungssystem (50), umfassend:
- mindestens eine Energiequelle mit einem Gleichspannungsausgang,
- mindestens einen elektrischen Verbraucher (53, 54) mit einem Gleichspannungsanschluss,
- mindestens einen zwischen Energiequelle und Verbraucher geschalteten Gleichstromschalter (10, 20, 30, 40, 57, 58) nach einem der vorangehenden Ansprüche.

10. Gleichspannungssystem nach Anspruch 9, bei dem die Energiequelle mit einem Gleichspannungs-Versorgungsbus (51) verbunden ist und der Gleichspannungs-Versorgungsbus (51) einen oder mehrere Abzweige (52) aufweist, an denen jeweils ein oder mehrere der Verbraucher (53, 54) angeschlossen sind, wobei für wenigstens einen Teil der Verbraucher (53, 54) ein zwischen Energiequelle und Verbraucher (53, 54) geschalteter Gleichstromschalter (10, 20, 30, 40, 57, 58) nach einem der Ansprüche 1 bis 8 vorhanden ist.

11. Gleichspannungssystem nach Anspruch 10, bei dem wenigstens ein Teil der Abzweige (52) einen Gleichstromschalter (10, 20, 30, 40, 57, 58) nach einem der Ansprüche 1 bis 8 zur Abschaltung des jeweiligen Abzweigs (52) aufweist.

12. Verfahren zur Steuerung eines Gleichstromschalters (10, 20, 30, 40, 57, 58) nach einem der Ansprüche 1 bis 8, bei dem
- in Abhängigkeit von einem Messwert für den Strom durch den Gleichstromschalter (10, 20, 30, 40, 57, 58) einer oder beide der abschaltbaren Leistungshalbleiter (11, 12, 31, 32) abgeschaltet werden,
- nach einer festlegbaren Zeitspanne eine Differenz zwischen Spannungswerten am ersten und am zweiten Anschluss (6, 8) ermittelt wird,
- einer oder beide der Leistungshalbleiter (11, 12, 31, 32) eingeschaltet werden, wenn der Betrag der Differenz unter einem Schwellwert liegt.
